# EUROPÄISCHE PATENTANMELDUNG

(11) **EP 2 671 735 A2**
(43) Veröffentlichungstag der Anmeldung: **11.12.2013**
(21) Anmeldenummer: 13002737.8
(22) Anmeldetag: 27.05.2013
(51) Int. Cl.: B60D 1/24, B60D 1/54

(54) **Anhängekupplung für ein Kraftfahrzeug**

(30) Priorität: 04.06.2012 DE 102012011071
(71) Anmelder: WESTFALIA - Automotive GmbH, 33378 Rheda-Wiedenbrück (DE)
(72) Erfinder: Söffge, Friedhelm, 71229 Leonberg (DE)
(74) Vertreter: Bregenzer, Michael

(57) **Zusammenfassung**

Diese Anhängekupplung ist für ein Kraftfahrzeug konzipiert, die einen zwischen einer Betriebsstellung und einer Ruhestellung verschwenkbaren Kugelhals mit einem an einem Aufbau des Kraftfahrzeugs befestigten Kugelhalslagerkopf aufweist, in welchen Kugelhalslagerkopf ein Steuerungsmechanismus integriert ist, der einen axial beweglichen mittels eines Betätigungssystems (9) in eine Entriegelungsstellung und eine Verriegelungsstellung verbringbaren Sperrbolzen umfasst.

Um diese Anhängekupplung zu optimieren, beeinflusst das Betätigungssystem unter Vermittlung einer Hydraulikeinrichtung (18) den Sperrbolzen (8), die mit einem den Sperrbolzen axial betätigbaren und sich zumindest abschnittsweise in einem Hydraulikmedium (Hm) enthaltenden Hydraulikraum (19) erstreckenden ersten Hydraulikkolben (20) versehen ist, wobei zur Steuerung des Sperrbolzens der erste Hydraulikkolben mittels eines in den Hydraulikraum einfahrbaren zweiten Hydraulikkolbens (21) und dem Hydraulikmedium verschiebbar ist.

## Beschreibung

Die Erfindung bezieht sich auf eine Anhängekupplung für ein Kraftfahrzeug, die einen zwischen einer Betriebsstellung und einer Ruhestellung verschwenkbaren Kugelhals mit einem an einem Aufbau des Kraftfahrzeugs befestigten Kugelhalslagerkopf aufweist.

Es ist eine Anhängekupplung für ein Kraftfahrzeug bekannt, DE 103 20 302 A1, die eine Kugelstange umfasst. Die Kugelstange ist einerseits mit einem Kugelstangenlagerkopf fest verbunden und an einem freien Endbereich mit einer Kupplungskugel versehen. Der Kugelstangenlagerkopf ist an einem Aufbau des Kraftfahrzeugs gehalten, wobei über einen drehbaren Lagerkopfbereich des Kugelstangenlagerkopfs die Kugelstange zwischen einer Betriebslage und einer Ruhelage verstellbar ist. Innerhalb des Kugelstangenlagerkopfs ist eine Verriegelung mit einem Sperrbolzen wirksam, der mit einem Handrad-Auslösemechanismus aus einer Verriegelungsstellung in eine Entriegelungsstellung verbringbar ist.

In der DE 20 2006 011 346 U1 wird eine Anhängevorrichtung für Kraftfahrzeuge offenbart, die einen Kugelhals umfasst. Letzterer ist um mindestens zwei translatorische Achsen beweglich und an einem Gestell der Anhängevorrichtung gelagert. Diese Anhängevorrichtung verfügt über einen mechanischen Antrieb zur Bewegung des Kugelhalses zwischen einer Betriebsstellung und einer Ruhestellung. Der Antrieb besteht aus einem Antriebsmotor, der ein Elektromotor -Getriebemotor- sein kann. Und dieser Antrieb weist eine Einrichtung zur Erzeugung einer zumindest bereichsweise überlagerten Rotationsbewegung des Kugelhalses um die beiden Achsen auf. In der Anhängevorrichtung ist eine Verriegelung des Kugelhalses in beiden Endstellungen vorgesehen.

Gemäß der EP 1 650 059 B1 ist eine Anhängekupplung für Kraftfahrzeuge an einem ortsfesten Querträger des jeweiligen Fahrzeugs angeordnet. Eine Kugelstange ist in einem verschwenkbaren Kupplungsgehäuse vorgesehen und lässt sich von einer Betriebsstellung in eine Ruhestellung und umgekehrt bewegen. Die Antriebseinrichtung besitzt einen elektrischen Antriebsmotor und arbeitet mittels eines Verstellgestänges mit einem gehäuseseitigen Ende der Kugelstange zusammen.

Aufgabe der Erfindung ist es, einen zwischen einer Betriebsstellung und einer Ruhestellung verstellbaren Kugelhalslagerkopf eines Kugelhalses für eine Anhängekupplung eines Kraftfahrzeuges mit funktionsgerechten und konstruktiv leicht umsetzbaren Mitteln auszustatten.

Nach der Erfindung wird diese Aufgabe durch die Merkmale des Patentanspruchs 1 gelöst. Weitere, die Erfindung ausgestaltende Merkmale sind in den Unteransprüchen enthalten.

Das Hydraulikmedium wird beispielsweise durch den zweiten Hydraulikkolben betätigt, so dass seine Kraft auf den ersten Hydraulikkolben übertragen wird. Es ist aber auch möglich, das Hydraulikmedium mit einer Pumpe anzutreiben. Die Pumpe wird zweckmäßigerweise durch einen Antriebsmotor angetrieben, der auch zur Verstellung des Kugelhalses relativ zum Kugelhalslagerkopf ausgestaltet ist, mithin also einem Schwenkantrieb oder Schiebeantrieb oder kombinierten Schwenk-SchiebeAntrieb.

Der Steuerungsmechanismus ist in einer zweckmäßigen, in der Zeichnung erläuterten Ausführungsform in den Kugelhalslagerkopf integriert. Es versteht sich, dass der Steuerungsmechanismus aber auch außerhalb des Kugelhalslagerkopfs angeordnet sein kann. Es ist beispielsweise auch möglich, dass der Sperrbolzen im oder am Kugelhals angeordnet ist.

Die mit der Erfindung hauptsächlich erzielten Vorteile sind darin zu sehen, dass mit einem einzigen Elektromotor des Betätigungssystems die Entriegelung des Sperrbolzens und die Schwenkbewegung und/oder Schiebebewegung des Kugelhalslagerkopfs bzw. des Kugelhals erfolgt, und zwar über eine Ablaufsteuerung -erst Beeinflussen des Sperrbolzens und dann Verschwenken und/oder Verschieben des Kugelhalses. Dabei setzt die Hydraulikeinrichtung des Betätigungssystems, umfassend den Hydraulikdruckraum sowie den ersten und zweiten Hydraulikkolben, Maßstäbe auf dem Gebiet der Anhängekupplung-Technologie, welcher erste Hydraulikkolben gezielt d.h. unmittelbar den Sperrmittel beeinflussenden Sperrbolzen beaufschlägt.

Der Sperrbolzen kann die Sperrmittel integral umfassen, beispielsweise in eine Sperr-Aufnahme eingreifen. Bevorzugt ist es, wenn der Sperrbolzen auf eines oder mehrere Formschlusselemente, zum Beispiel Kugeln, Bolzen oder dergleichen einwirkt, die mit korrespondierenden Formschlusskonturen, zum Beispiel einer Rinne, einer Kugelkalotte oder dergleichen, zusammenwirken. Zweckmäßig ist es z.B., dass der Sperrbolzen das oder die Formschlusselemente beispielsweise in eine jeweilige Formschlussaufnahme hinein verstellt.

Der Sperrbolzen ist zweckmäßigerweise in seine Verriegelungsstellung oder seine Entriegelungsstellung durch eine Federanordnung federbelastet.

Der Kugelhals ist am und/oder im Kugelhalslagerkopf schwenkbar und/oder verschieblich gelagert. Mithin ist also auch eine Axial-Verschiebung zusätzlich zu einer Schwenkbewegung des Kugelhalses relativ zum fahrzeugfest festgelegten oder festlegbaren Kugelhalslagerkopf möglich. Der Kugelhals kann auch bezüglich des Kugelhalslagerkopfs ausschließlich schwenkbar oder verschieblich sein.

Der Kugelhalslagerkopf kann zweiteilig sein und eine fahrzeugfest am Kraftfahrzeug befestigte oder befestigbare erste Lagerkomponente und eine zweite, mit dem Kugelhals verbundene, beispielsweise mit diesem einstückige, Lagerkomponente umfassen.

Es ist aber auch möglich, dass der Kugelhalslagerkopf den Kugelhals unmittelbar lagert.

Der Kugelhalslagerkopf kann eine einteilige Baueinheit darstellen oder auch mehrteilig sein.

Der Kugelhalslagerkopf kann eine Aufnahme, in die der Kugelhals mit einem entsprechenden Lagerzapfen eingreift und/oder einen insbesondere als Lagerzapfen ausgestalteten Lagervorsprung aufweisen, auf dem der Kugelhalslagerkopf gelagert ist.

An dieser Stelle sei erwähnt, dass der Kugelhals selbstverständlich auch andere Kuppelelemente zum Ankuppeln eines Anhängers oder eines Lastenträgers tragen kann als eine Kugel, beispielsweise eine Steckaufnahme haben kann oder dergleichen.

Der Hydraulikraum ist zweckmäßigerweise in einem rohrartigen Hüllkörper untergebracht.

Der erste Hydraulikkolben kann mit dem Sperrbolzen verbunden sein oder auch einstückig mit dem Sperrbolzen sein.

Der erste Hydraulikkolben kann ein von dem Sperrbolzen separates Bauteil sein.

Bevorzugt ist es, wenn der erste Hydraulikkolben relativ zu dem Sperrbolzen beweglich ist, so dass ein Freigang zwischen einerseits dem Hydraulikkolben und andererseits dem Sperrbolzen realisierbar ist.

Vorteilhaft ist vorgesehen, dass ein den Hydraulikraum umgebender Hüllkörper zur Übertragung von Antriebskräften auf den Kugelhals ausgestaltet ist. Der Hüllkörper ist beispielsweise torsionssteif und/oder entlang einer Stellachse steif, so dass er Kräfte von einem Antrieb, insbesondere einer Getriebeeinheit, auf den Kugelhals übertragen kann. Der Hüllkörper kann quer zu der Richtung, in der er Kräfte überträgt, flexibel sein.

Beispielsweise ist der Hydraulikraum räumlich günstig in einem rohrartigen Hüllkörper einer torsionssteifen und/oder zur Übertragung einer Drehbewegung und/oder Schiebebewegung ausgestalteten Balgkupplung untergebracht, welche Balgkupplung Drehbewegungen einer Getriebeeinheit auf den verschwenkbaren Teil des Kugelhalslagerkopfs oder den Kugelhals überträgt. Musterhaft ist, dass erste und zweite Enden der Balgkupplung mit ersten und zweiten Befestigungskonsolen versehen sind, die fest mit einem Gehäuseabschnitt und einem Kopfteil eines Übertragungsglieds der Getriebeeinheit verbunden sind. Funktionserweiternd wirkt, dass in die erste und die zweite Befestigungskonsole der Balgkupplung erste und zweite Lager für den ersten und den zweiten Hydraulikkolben vorgesehen sind.

Es ist auch eine Balgkupplung oder Balg-Verbindung zwischen dem Kugelhalslagerkopf und der Getriebeeinheit oder einer sonstigen Komponente des Betätigungssystems möglich, in welcher das Hydraulikmedium aufgenommen ist.

Ein Hüllkörper, welcher den Hydraulikraum umgibt, ist zweckmäßigerweise als eine Bewegung des Kugelhalses relativ zum Kugelhalslagerkopf mitmachende flexible Hülle ausgestaltet.

Technik fördernd ist, dass in das hülsenartig gestaltete Übertragungsglied, eine Bohrung für einen ersten Lagerabschnitt einer Antriebshülse eingearbeitet ist, der mit einem zweiten Lagerabschnitt des Übertragungsglieds zusammenarbeitet. Hervorzuheben ist, dass die Antriebshülse ein erstes Zahnrad besitzt, das mit einem zweiten Zahnrad in Wirkverbindung steht. Der Freilauf, der zwischen dem Übertragungsglied und bspw. dem ersten Zahnrad der Übertragungshülse wirksam ist, zeichnet sich durch ausgezeichnete Betriebseigenschaften aus, dergestalt, dass das Übertragungsglied erst nach einem definierten Kreisumfangsweg der Antriebshülse in Drehbewegung versetzt wird. D.h. der Freilauf ermöglicht die Ablaufsteuerung für den Sperrbolzen und den Kugelhals.

Eine geschickte Lösung ist, dass innerhalb der Übertragungshülsenbohrung der Übertragungshülse die Steuerhülse axialbeweglich gelagert ist. Die Steuerhülse nimmt am ersten Ende den zweiten Hydraulikkolben auf, und sie ist am zweiten Ende mit der Kulissenbahn der Steuerhülse versehen. Besagte Kulissenbahn arbeitet hoch wirksam mit dem Steuerglied, es ist z.B. eine Rolle, der Übertragungshülse zusammen. Eine ausgeklügelte Auslegung wird dadurch erreicht, wenn in der Steuerhülsenbohrung der Steuerhülse ein Führungszapfen ruht, der mit einem Führungsglied in eine axiale Führungsnut der axialen Steuerhülsenbohrung eingreift, so dass diese Steuerhülse lediglich axial beweglich ist. Unterstützt wird diese Auslegung dadurch, dass der Führungszapfen mittels der Haltekonsole am Getriebegehäuse der Getriebeeinheit befestigt ist.

Schließlich zeichnet sich das Getriebegehäuse dadurch aus, dass zum einen es zumindest bereichsweise das zweite Zahnrad, die Antriebshülse mit dem ersten Zahnrad und das Übertragungsglied umgibt und zum anderen es aus zwei Gehäuseschalen besteht, die in einer Verbindungsebene zusammengesetzt sind. Dabei schneidet eine Linie der Verbindungsebene Drehachsen des ersten und des zweiten Zahnrads z.B. im rechten Winkel.

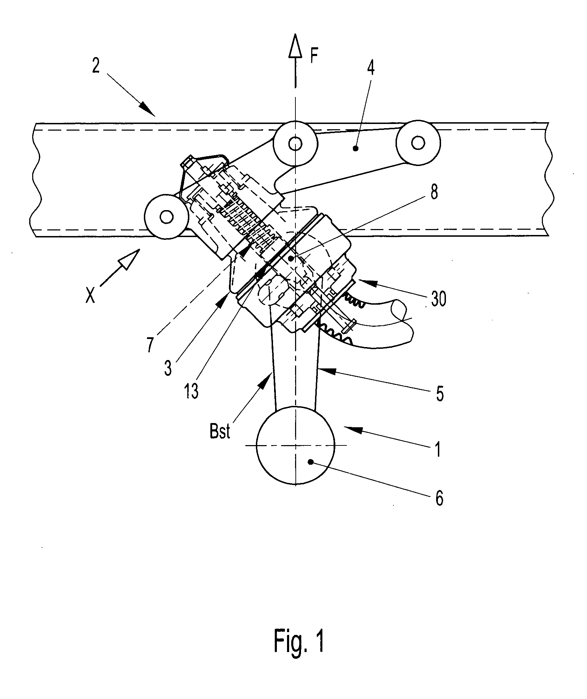

Es zeigen
- Fig. 1: eine schematische Ansicht von oben auf eine Anhängekupplung für ein Kraftfahrzeug mit einem Querträger, an dem ein Kugelhalslagerkopf mit einem Kugelhals in Lage gehalten wird,
- Fig. 2: eine Ansicht etwa entsprechend der Fig. 1 in größerem Maßstab und teilweise im Schnitt,
- Fig. 3: einen schematischen Schnitt entlang der Linie III-III der Fig. 2.

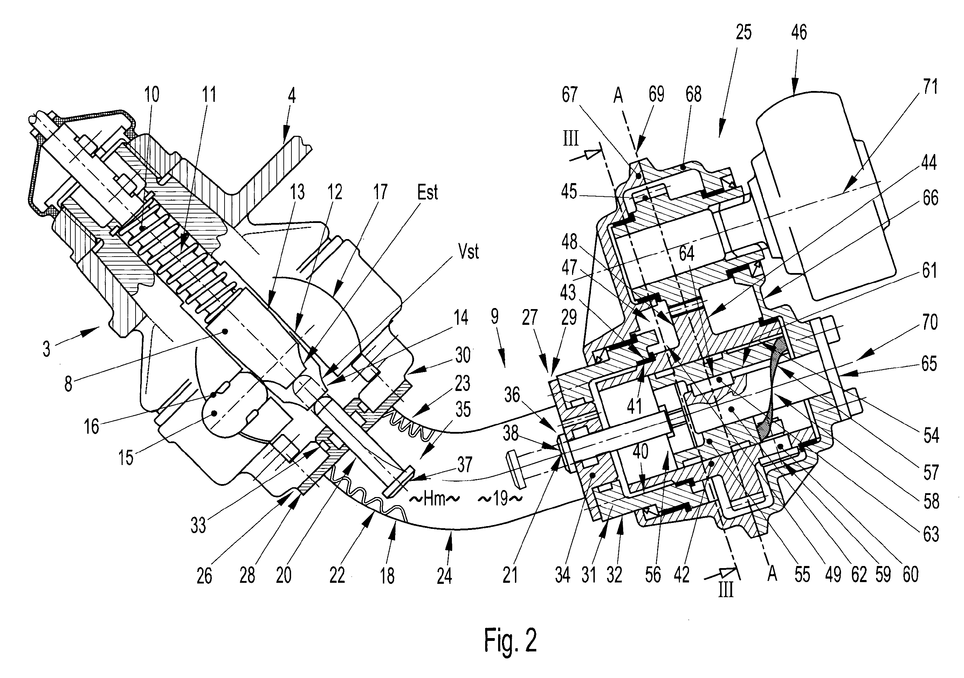

Eine Anhängekupplung 1 für ein nicht näher dargestelltes Kraftfahrzeug, dessen Fahrtrichtung mit F angegeben ist, ist z.B. in einem Heck dieses Kraftfahrzeugs befestigt und weist einen Querträger 2 auf, an dem ein Kugelhalslagerkopf 3 unter Vermittlung einer Lagerkonsole 4 gehalten wird. Der Kugelhalslagerkopf 3 trägt einen Kugelhals 5, der an einem freien Ende mit einer Kupplungskugel 6 versehen ist. In den Kugelhalslagerkopf 3 integriert ist ein Steuerungsmechanismus 7, der einen axial beweglichen Sperrbolzen 8 umfasst. Hierzu wird beispielsweise auf die Lösung der eingangs zitierten DE 103 20 302 verwiesen. Der Sperrbolzen 8 ist mittels eines Betätigungssystems 9 -Fig. 2- zwischen einer Verriegelungsstellung Vst und einer Entriegelungsstellung Est bewegbar. Mit dem Sperrbolzen 8 in axialer Richtung verbunden ist ein Führungsbolzen 10, welcher Sperrbolzen (8) mit Führungsbolzen 10 eine Druckfeder 11 in die Verriegelungsstellung Vst zu bewegen sucht. An einem freien Ende 12 des Sperrbolzens 8 ist ein von einem Schaft 13 des Sperrbolzens 8 aus sich verjüngender Steuerkopf 14 vorgesehen, wobei der Schaft 13 und der Steuerkopf 14 mit einem Sperrmittel 15 in Wirkverbindung steht, das gegenüber dem Sperrbolzen 8 radial verschiebbar und in einer Führungsbohrung 16 eines Lagerelements 17 des Kugelhalslagerkopfs 3 angeordnet ist.

Das Betätigungssystem 9 beeinflusst unter Vermittlung einer Hydraulikeinrichtung 18 den Sperrbolzen 8. Die Hydraulikeinrichtung 18 ist mit einem den Sperrbolzen 8 axial betätigbaren und sich zumindest abschnittsweise in einem Hydraulikmedium Hm enthaltenden Hydraulikraum 19 erstreckenden ersten Hydraulikkolben 20 versehen. Letzterer ist mittels eines zweiten in den Hydraulikraum 19 eindringbaren Hydraulikkolbens 21 und dem Hydraulikmedium Hm axial verschiebbar, dergestalt, dass der Sperrbolzen 8 in die Entriegelungsstellung Est steuerbar ist. Der auf die radialen Sperrmittel 15 einwirkende Sperrbolzen 8, der koaxial zu dem ersten Hydraulikkolben 20 ausgerichtet ist, arbeitet unmittelbar mit besagtem erstem Hydraulikkolben 20 zusammen.

Der Hydraulikraum 19 ist von einem Hüllkörper 22 umgeben, der zu einer torsionssteifen rohrartigen Balgkupplung 23 mit einem Bogen 24 gehört. Die Balgkupplung 23 ist zwischen dem Kugelhalslagerkopf 3 und einer Getriebeeinheit 25 des Betätigungssystems 9 vorgesehen. Erste und zweite Enden 26 und 27 der Balgkupplung 23 sind mit ersten und zweiten Befestigungskonsolen 28 und 29 versehen, die einen in etwa rechten Winkel zu den angrenzenden Abschnitten der Balgkupplung 23 einschließen. Die ersten und zweiten Befestigungskonsolen 28 und 29 sind fest mit einem Gehäuseabschnitt 30 des Kugelhalslagerkopfs 3 bzw. einem Kopfteil 31 eines Übertragungsglieds 32 der Getriebeeinheit 25 unter Vermittlung von Schrauben verbunden. Und in die ersten und zweiten Befestigungskonsolen 28 und 29 sind erste und zweite Kolbenlager 33 und 34 zur Führung der ersten und zweiten Hydraulikkolben 20 und 21 integriert, die an einander zugekehrten Enden 35 und 36 Kolbenköpfe 37 und 38 besitzen. Durchmesser von Schäften der Hydraulikkolben 20 und 21 sind größer als die Durchmesser von Schäften der besagten Hydraulikkolben 20 und 21.

In das hülsenartig ausgebildete Übertragungsglied 32 ist eine Hülsenbohrung 40 für einen ersten Lagerabschnitt 41 einer Antriebshülse 42 eingearbeitete, welcher erste Lagerabschnitt 41 mit einem zweiten Lagerabschnitt 43 der Hülsenbohrung 40 des Übertragungsglieds 32 in Wirkverbindung steht. Die Antriebshülse 42 trägt ein erstes Zahnrad 44, das mit einem zweiten Zahnrad 45 kämmt; beide Zahnräder 44 und 45 bilden im Ausführungsbeispiel eine Stirnradpaarung. Das zweite Zahnrad 45 wird von einem Elektromotor 46 angetrieben.

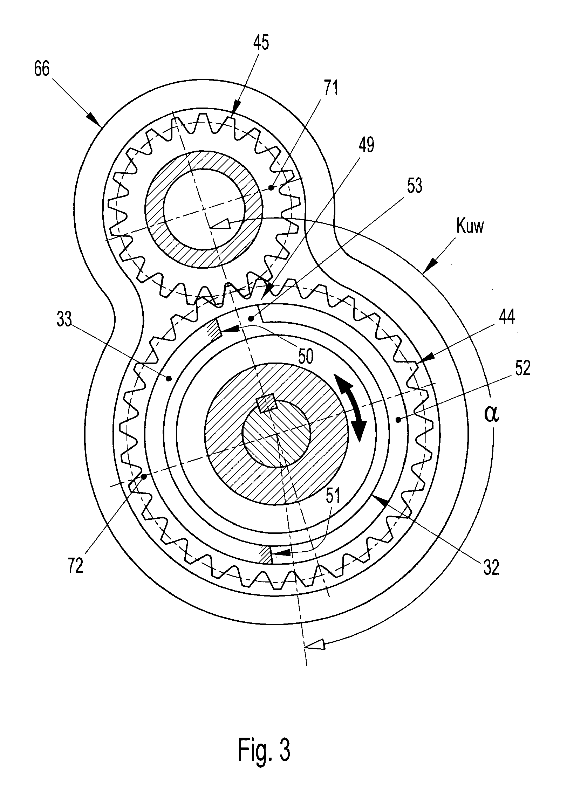

Zwischen einem von der Balgkupplung 23 abgekehrten Endbereich 47 des Übertragungsglieds 32 und einer diesem Endbereich 47 zugekehrten Stirnseite 48 des ersten Zahnrads 44 der Antriebshülse 42 ist ein Freilauf 49 wirksam. Durch diesen Freilauf 49 wird das Übertragungsglied 32 erst nach einem definierten Kreisumfangsweg Kuw der Antriebshülse 42 in Drehbewegung versetzt. Hierzu weist der Freilauf 49 am Übertragungsglied 32 einen ersten Anschlag 50 und einen zweiten Anschlag 51 -Fig. 3- auf, welche Anschläge 50 und 51 eine ringartige Ausnehmung 52 begrenzen. In der Ausnehmung 52 ist zwischen den in einem Winkel α von 190° zueinander angeordneten Anschlägen 50 und 51 ein Mitnehmer 53 rotierbar, der an dem ersten Zahnrad 44 angebracht ist.

Innerhalb einer Antriebshülsenbohrung 54 der Antriebshülse 42 ist eine Steuerhülse 55 axialbeweglich gelagert, die an einem ersten Ende 56 den zweiten Hydraulikkolben 21 aufnimmt sowie in Lage hält und an einem zweite Ende 57 mit einer spiralartigen Kulissenbahn 58 versehen ist. Die Kulissenbahn 58 der Steuerhülse 55 wird von einem Steuerglied 59 bspw. in Gestalt einer Gleitrolle 60 der Übertragungshülse 42 beeinflusst. In einer Steuerhülsenbohrung 61 der Steuerhülse 55 ruht ein Führungszapfen 62, der mit einem Führungsglied 63 in eine Führungsnut 64 der axialen Steuerhülsenbohrung 61 eingreift, und zwar in der Weise, dass die Steuerhülse 55 lediglich in axialer Richtung beweglich ist.

Der Führungszapfen 62 ist mittels einer Haltekonsole 65 und Schrauben an einem Getriebegehäuse 66 der Getriebeeinheit 25 befestigt. Das Getriebegehäuse 66 umgibt zumindest bereichsweise das zweite Zahnrad 45, die Antriebshülse 42 mit dem ersten Zahnrad 44 und das Übertragungsglied 32. Schließlich besteht das Getriebegehäuse 66 aus zwei Gehäuseschalen 67 und 68, die in einer Verbindungsebene A-A zusammengesetzt sind. Eine Linie 69 der Verbindungsebene A-A schneidet Drehachsen 70 und 71 des ersten Zahnrads 44 und des zweiten Zahnrads 45 bspw. im rechten Winkel.

Um den Kugelhalslagerkopf 3 von der Betriebsstellung Bst in die Ruhestellung zu bewegen, wird der Elektromotor 46 für die Ablaufsteuerung des Betätigungssystems 9 aktiviert, will heißen zuerst Beeinflussen des Sperrbolzens 8 und dann Verschwenken des beweglichen Teils des Kugelhalslagerkopfs 3 bzw. Kugelhalses 5. Dadurch treibt das zweite Zahnrad 45 das erste Zahnrad 44 mit der Antriebshülse 42 an, wodurch das Steuerglied 59 bzw. die Gleitrolle 60 entlang der Kulissenbahn 58 sich abwälzt und die lediglich axial bewegliche Steuerhülse 55 in Richtung Balgkupplung 23 drängt. Dies hat zur Folge, dass der zweite Hydraulikkolben 21 in den Hydraulikraum 19 eindringt und den Druck des Hydraulikmediums im Hydraulikraum 19 erhöht. Aufgrund der Druckerhöhung wird der erste Hydraulikkolben 20 beaufschlagt, so dass letzterer an dem Sperrbolzen 8 angreift und besagten Sperrbolzen 8 von der Verriegelungsstellung Vst in die Entriegelungsstellung Est bewegt. Die Rotationsbewegung der Steuerhülse 55 bewirkt, dass der Mitnehmer 53 vom ersten Anschlag 50 in der Ausnehmung 52 sich so lange widerstandslos dreht bis besagter Mitnehmer 53 an den zweiten Anschlag 51 gelangt. Jetzt werden das Übertragungsglied 32 und die Balgkupplung 23 in Drehbewegung versetzt und damit der bewegliche Teil des Kugelhalslagerkopfs 3 mit dem Kugelhals 5 in die Ruhestellung verbracht. Die Verstellung des Kugelhals 5 aus der Ruhestellung in die Betriebsstellung erfolgt auf umgekehrte Weise.

## Patentansprüche

1. Anhängekupplung für ein Kraftfahrzeug, die einen zwischen einer Betriebsstellung und einer Ruhestellung um mindestens eine Achse verschwenkbaren und/oder verschieblichen Kugelhals und einen an einem Aufbau des Kraftfahrzeugs befestigten oder befestigbaren Kugelhalslagerkopf aufweist, wobei die Anhängekupplung einen zweckmäßigerweise in den Kugelhalslagerkopf integrierten Steuerungsmechanismus aufweist, der einen axial beweglichen mittels eines Betätigungssystems in eine Entriegelungsstellung und eine Verriegelungsstellung verbringbaren Sperrbolzen umfasst, **dadurch gekennzeichnet, dass** das Betätigungssystem (9) unter Vermittlung einer Hydraulikeinrichtung (18) den Sperrbolzen (8) beeinflusst, die mit einem den Sperrbolzen (8) axial betätigbaren und sich zumindest abschnittsweise in einem Hydraulikmedium (Hm) enthaltenden Hydraulikraum (19) erstreckenden ersten Hydraulikkolben (20) versehen ist, wobei zur Steuerung des Sperrbolzens (8) der erste Hydraulikkolben (20) mittels eines in den Hydraulikraum (19) einfahrbaren zweiten Hydraulikkolbens (21) und dem Hydraulikmedium (Hm) oder in den Hydraulikraum (19) einströmenden oder ausströmenden Hydraulikmedium (Hm) verschiebbar ist.

2. Anhängekupplung nach Anspruch 1, **dadurch gekennzeichnet, dass** der Sperrbolzen (8) mit dem ersten Hydraulikkolben (20) zusammenarbeitet, wobei der Sperrbolzen (8) auf radiale Sperrmittel (15) und/oder mindestens ein, insbesondere radial zu einer Stellachse des Sperrbolzens (8) verstellbares, Formschlusselement einwirkt.

3. Anhängekupplung nach Anspruch 1 oder 2, **dadurch gekennzeichnet, dass** der Sperrbolzen (8) durch, insbesondere einen Führungsbolzen (10) des Sperrbolzens (8) umgebende, Zugfeder oder Druckfeder (11) in eine Verriegelungsstellung (Vst) belastet ist.

4. Anhängekupplung nach einem der vorhergehenden Ansprüche, **dadurch gekennzeichnet, dass** der Hydraulikraum (19) von einem insbesondere torsionssteifen und/oder axial steifen, Hüllkörper (22), insbesondere einer Balgkupplung (23), umgeben wird, der zwischen einer Getriebeeinheit (25) des Betätigungssystems (9) und dem Kugelhalslagerkopf (3) oder dem Kugelhals (5) vorgesehen ist, wobei der Hüllkörper (22) vorzugsweise zu einer Kraftübertragung von der Getriebeeinheit (25) zum Kugelhals (5) ausgestaltet ist.

5. Anhängekupplung nach Anspruch 4, **dadurch gekennzeichnet, dass** erste und zweite Enden (26 und 27) des Hüllkörpers (22), insbesondere der der Balgkupplung (23), mit ersten und zweiten Befestigungskonsolen (28 und 29) versehen sind, die fest mit einem Gehäuseabschnitt (30) des Kugelhalslagerkopfs (3) oder des Kugelhalses (5) bzw. einem Kopfteil (31) eines Übertragungsglieds (32) der Getriebeeinheit (25) verbunden sind.

6. Anhängekupplung nach Anspruch 5, **dadurch gekennzeichnet, dass** in die erste und die zweite Befestigungskonsole (28 und 29) der Balgkupplung (23) erste und zweite Kolbenlager (33 und 34) für den ersten und den zweiten Hydraulikkolben (20 und 21) vorgesehen sind.

7. Anhängekupplung nach Anspruch 6, **dadurch gekennzeichnet, dass** in das hülsenartig ausgebildete Übertragungsglied (32) eine Hülsenbohrung (40) für einen ersten Lagerabschnitt (41) einer Antriebshülse (42) eingearbeitet ist, der mit einem zweiten Lagerabschnitt (43) des Übertragungsglieds (32) zusammenwirkt.

8. Anhängekupplung nach Anspruch 7, **dadurch gekennzeichnet, dass** die Antriebshülse (42) ein erstes Zahnrad (44) besitzt, das mit einem zweiten Zahnrad (45) eines Elektromotors (46) in Wirkverbindung steht.

9. Anhängekupplung nach einem der vorhergehenden Ansprüche, **dadurch gekennzeichnet, dass** zwischen dem Übertragungsglied (32) und bspw. dem ersten Zahnrad (44) der Antriebshülse (42) ein Freilauf (49) wirksam ist, dergestalt, dass das Übertragungsglied (32) erst nach einem definierten Kreisumfangsweg (Kwu) der Antriebshülse (42) in Drehbewegung versetzt wird.

10. Anhängekupplung nach einem der vorhergehenden Ansprüche, **dadurch gekennzeichnet, dass** innerhalb einer Antriebshülsenbohrung (54) der Antriebshülse (42) eine Steuerhülse (55) axialbeweglich gelagert ist, die mit einem ersten Ende (56) den zweiten Hydraulikkolben (21) aufnimmt und an einem zweiten Ende (57) mit einer Kulissenbahn (58) versehen ist.

11. Anhängekupplung nach Anspruch 10, **dadurch gekennzeichnet, dass** die Kulissenbahn (58) der Steuerhülse (55) mit einem Steuerglied (59) z.B. in Form einer Gleitrolle (60) der Antriebshülse (42) zusammenarbeitet.

12. Anhängekupplung nach den Ansprüchen 10 und 11, **dadurch gekennzeichnet, dass** in einer Steuerhülsenbohrung (61) der Steuerhülse (55) ein Führungszapfen (62) ruht, der mit einem Führungsglied (63) in eine Führungsnut (64) der axialen Steuerhülsenbohrung (61) eingreift, dergestalt, dass die Steuerhülse (55) lediglich axial beweglich ist.

13. Anhängekupplung nach Anspruch 12, **dadurch gekennzeichnet, dass** der Führungszapfen (62) mittels einer Haltekonsole (65) an einem Getriebegehäuse (66) der Getriebeeinheit (25) befestigt ist.

14. Anhängekupplung nach einem der vorhergehenden Ansprüche, **dadurch gekennzeichnet, dass** das Getriebegehäuse (66) zumindest bereichsweise das zweite Zahnrad (45), die Antriebshülse (42) mit dem ersten Zahnrad (44) und das Übertragungsglied (32) umgibt und/oder dass das Getriebegehäuse (66) aus zwei Gehäuseschalen (67 und 68) besteht, die in einer Verbindungsebene (A-A) zusammengesetzt sind, wobei eine Linie (69) der Verbindungsebene (A-A) Drehachsen (70, 71) des ersten und des zweiten Zahnrads (44 und 45) z.B. im rechten Winkel schneidet.

15. Anhängekupplung nach einem der vorhergehenden Ansprüche, **dadurch gekennzeichnet, dass** sie eine Hydraulikpumpe zum Erzeugen von Druck auf das Hydraulikmedium umfasst und/oder dass der zweite Hydraulikkolben (21) oder eine Hydraulikpumpe durch einen zur Verstellung des Kugelhalses relativ zum Kugelhalslagerkopf vorgesehenen Antriebsmotor, insbesondere einen Elektromotor (46), angetrieben ist und/oder dass sie eine Ablaufsteuerung zu einem Beeinflussen des Sperrbolzens und einem anschließenden Verschwenken und/oder Verschieben des Kugelhalses (5) aufweist.
